(19) Europäisches Patentamt
European Patent Office
Office européen des brevets

(11) **EP 3 401 921 A1**

(12) **EUROPEAN PATENT APPLICATION**

(43) Date of publication:
**14.11.2018 Bulletin 2018/46**

(51) Int Cl.:
***G21B 3/00*** *(2006.01)*     ***G21D 7/04*** *(2006.01)*

(21) Application number: **17170748.2**

(22) Date of filing: **12.05.2017**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **RIToN Holding Ltd
Tortola (VG)**

(72) Inventor: **LIDGREN, Hans
MC-98000 Monaco (MC)**

(74) Representative: **AWA Sweden AB
P.O. Box 5117
200 71 Malmö (SE)**

(54) **AN ELECTRIC GENERATOR AND A METHOD FOR GENERATING ELECTRICITY**

(57) A method for generating electricity is disclosed. The method comprises: subjecting a fuel, comprising a first and a second fuel component, to input electromagnetic radiation for producing: a nucleus mass reducing isotope shift in the first fuel component, a nucleus mass increasing isotope shift in the second fuel component, and output electromagnetic radiation resulting from the nucleus mass increasing isotope shift; and generating electricity from the output electromagnetic radiation by transforming the output electromagnetic radiation into electricity by photoelectrically transforming the output electromagnetic radiation into electrons at a first electrode (52), and collecting the electrons at a second electrode (22) or by photovoltaically transforming the output electromagnetic radiation into electricity at a photovoltaic cell (70). Also an electricity generator for generating electricity according to the above is disclosed.

Fig. 2

**Description**

Technical field

The present invention relates to an electricity generator. The invention also relates to a method for generating electricity.

Background

Production of energy is one of the top most priorities of mankind. A lot of effort is put into finding new technologies for energy production. A first step in a new technology of energy production is disclosed in EP 3 086 323 A1.

Summary of the invention

In view of the above, it is an object of the present invention to provide novel means for energy production.

According to a first aspect a method for generating electricity is provided. The method comprises: subjecting a fuel, the fuel comprising a first and a second fuel component, to input electromagnetic radiation for producing: a nucleus mass reducing isotope shift in the first fuel component, a nucleus mass increasing isotope shift in the second fuel component, and output electromagnetic radiation resulting from the nucleus mass increasing isotope shift; and generating electricity from the output electromagnetic radiation by transforming the output electromagnetic radiation into electricity by photoelectrically transforming the output electromagnetic radiation into electrons at a first electrode, and collecting the electrons at a second electrode or by photovoltaically transforming the output electromagnetic radiation into electricity at a photovoltaic cell.

By exposure for input electromagnetic, EM, radiation is here meant that input EM radiation irradiates at least a portion of the first fuel component. The input EM radiation may comprise photons having at least one frequency, or frequency mode. In a first example, the input EM radiation comprises photons having a plurality of frequency modes. In a second example, the input EM radiation is substantially monochromatic comprising photons with a fixed frequency. Moreover, the input EM radiation may have a preferred level of intensity and/or power. The preferred level of intensity and/or power may be associated with specific frequencies. Optionally, the input EM radiation may be polarized.

The input EM radiation may affect the first and second fuel components such that the fuel will enter a plasma phase.

Further, the input EM radiation may transfer energy to the first fuel component. The energy transfer may be provided by means of a wave-particle acceleration process. Upon transferring energy to the first fuel component it will assume a high-energy state wherein the neutrons of the first fuel component will be affected and a nucleus mass reducing isotope shift will occur. At least a portion of the first fuel component may assume the high-energy state. Typically, the nucleus mass reducing isotope shift will occur when the energy transferred by the input EM radiation is higher or equal to a threshold energy. Additionally, however, a quantum mechanical tunnelling effect may allow for the nucleus mass reducing isotope shift below the threshold energy.

The wave-particle acceleration process may be chosen based on physical properties of the first fuel component. By way of example, the physical properties of the first fuel component may relate to a type of material of the first fuel component, a type of lattice structure of the material, physical quantities of the material, such as its atomic mass, number of atoms, atomic separation distance, speed of sound, characteristic plasma velocity, local temperature, average temperature, etc., length dimensions of the lattice structure of the material, length dimensions of a grain structure of the material, and geometry of the lattice structure of the material. The physical properties may also be a plasma resonance frequency of the first fuel component.

The energy received by the wave-particle acceleration process, may be transferred to the first fuel component at a preferred intensity. The plasma resonance frequency has an associated frequency w and an associated resonant wave length $\lambda$.

A nucleus mass reducing isotope shift is produced in the first fuel component. Neutrons released from the first fuel component at the nucleus mass reducing isotope shift of the first fuel component will induce a nucleus mass increasing isotope shift in the second fuel component. Excess energy resulting from the mass increasing isotope shift in the second fuel component may be outputted as electromagnetic radiation.

By the second fuel component undergoing the nucleus mass increasing isotope shift excess energy will be generated. More particularly, the process of the nucleus mass increasing isotope shift in the second fuel component may release more energy than the energy required for the nucleus mass reducing isotope shift in the first fuel component.

By output EM radiation is here meant energy which is released in the process of the nucleus mass increasing isotope shift in the second fuel component. The energy will be released in the form of electromagnetic waves/photons.

By photoelectrically transforming the output electromagnetic radiation to electrons at the first electrode and collecting the electrons at the second electrode, electricity may be generated in a cheap and efficient manner.

By transforming the output electromagnetic radiation into electricity at the photovoltaic cell electricity may be generated in a cheap and efficient manner.

By means of the inventive concept, there are normally no element transmutations. Instead, there are isotope shifts of the first fuel component and of the second fuel component. By isotopes is meant a set of nuclides having the same atomic number Z but having different neutron numbers $N = A-Z$, where A is the mass number. In the process of isotope shift, the mass number A of the isotope is shifted by at least one integer step. The mass reducing isotope shift may be an isotope shift from an isotope $^{A}P$ with mass number A to an isotope $^{A-1}P$ with mass number A-1. The mass increasing isotope shift may be an isotope shift from an isotope $^{A}P$ with mass number A to an isotope $^{A+1}P$ with mass number A+1.

The first fuel component may be deuterium. The mass reducing isotope shift in the first fuel element may hence originate from the reaction channel $D + W_s \rightarrow n + {}^{1}H$, where D is deuterium, $^{2}H$, and where $^{1}H$ is protium, i.e. hydrogen with no neutron in the nucleus. Further, $W_s$ is the threshold energy for the mass reducing isotope shift to occur. The threshold energy for inducing a mass reducing isotope shift in D is 2.25 MeV. It is noted that $^{1}H$ as well as $^{2}H$ are stable isotopes per se, but that the reaction above may be induced by irradiation above the threshold energy.

The fuel may be a solid, preferably $TiD_x$. By using a solid as the fuel, the input electromagnetic radiation may be in the infrared spectral range. Hence, the input electromagnetic radiation may be in the infrared spectral range and below. Accordingly, input electromagnetic radiation may have a frequency of 430 THz - 300 GHz. Especially, the input electromagnetic radiation may be considered as thermal radiation. Thus, the source unit may be configured to expose the fuel for electromagnetic radiation input energy in the infrared spectral range.

$TiD_x$ is a preferred fuel since deuterium is a good candidate for the first fuel component and titanium is a good candidate for the second fuel component. This due to that the nucleus mass reducing isotope shift in deuterium is less energy demanding than nucleus mass reducing isotope shifts in titanium. There will approximately be a factor 5 more energy released after a nucleus mass increasing isotope shift in titanium than is demanded for the nucleus mass reducing isotope shift in deuterium. Further, $TiD_x$ is commercially available, especially in powder form. $TiD_x$ powder may be a good candidate for the fuel since it is easy to contain in the fuel container.

According to a second aspect an electricity generator is provided. The electricity generator comprises: a fuel container for containing a fuel, the fuel comprising a first and a second fuel component; a source unit configured to expose the fuel for input electromagnetic radiation for producing: a nucleus mass reducing isotope shift in the first fuel component, a nucleus mass increasing isotope shift in the second fuel component, and output electromagnetic radiation resulting from the nucleus mass increasing isotope shift; a first electrode configured to photoelectrically transform the output electromagnetic radiation into electrons; and a second electrode configured to collect the electrons, thereby provide generation of electricity.

According to a third aspect an alternative electricity generator is provided. The alternative electricity generator comprises: a fuel container for containing a fuel comprising a first and a second fuel component; a source unit configured to expose the fuel for input electromagnetic radiation for producing: a nucleus mass reducing isotope shift in the first fuel component, a nucleus mass increasing isotope shift in the second fuel component, and output electromagnetic radiation resulting from the nucleus mass increasing isotope shift; and a photovoltaic cell configured to transform the output electromagnetic radiation into electricity.

The source unit may comprise an induction coil arrangement. The use of an induction coil arrangement for producing infrared radiation is an efficient source of the infrared radiation.

The electricity generator may further comprise an electricity generator housing. The electricity generator housing may surround the fuel container. The fuel container may comprise a fuel container housing. The fuel container housing may support the second electrode. An inner layer of the electricity generator housing may constitute the first electrode.

The electricity generator housing and the fuel container housing may delimit a compartment. The first and second electrodes may be arranged at opposing borders of the compartment.

The compartment may be evacuated. The efficiency of collecting the electrons may be enhanced. Further, the evacuated compartment may act as an insulator for the fuel container containing the heat accumulated therein in the fuel container.

The compartment may comprise an inlet for an incoming flow of a fluid and an outlet for an outgoing flow of the fluid. The fluid is preferably an inert gas, preferably neon. By allowing the fluid to flow in the compartment, the electricity generator may be controlled. For example, the temperature of the fuel container may be controlled, the electricity generator may be stopped, and leaking gas, e.g. deuterium or hydrogen, may be evacuated from the compartment.

The electricity generator housing may further comprise a secondary cooling unit configured to regulate the temperature of the electricity generator.

The above mentioned features of the method, when applicable, apply to the second and third aspects as well. In order to avoid undue repetition, reference is made to the above.

Further, the output electromagnetic radiation may be in the ultra violet spectral range.

In the following, the concept of gradient force in relation to the first and the second fuel components will be discussed. As will be elaborated on below, the gradient force may arise from the penetration of EM waves into matter in any aggregate state.

In plasma physics, the ponderomotive force is well-known to be an effective description of a time-averaged non-linear force which acts on a medium comprising charged particles in the presence of an inhomogeneous oscillating EM field. The basis of the time-averaged ponderomotive force is that EM waves transfer energy and momentum to matter.

Of the five potential ponderomotive effects, the Miller force and the Abraham force are considered to be the most powerful in a weakly magnetized, or magnetic gradient-free, environment. However, depending on the method of inputting electromagnetic radiation, effects of the magnetic gradient force cannot be excluded.

The overall enabling ponderomotive acceleration force considered here is the Miller force or, equivalently, the gradient force.

Under the assumption that the fuel after being subjected to the input EM radiation may be treated as a plasma, the concept of gradient forcing may be applied. For two reasons, an Alfvén wave analogy will be chosen in deriving the gradient force in plasma. Firstly, because Alfvén waves have been observed in plasmas at all states, i.e. in plasma states, gaseous states, liquid states, and solid states. Secondly, because Alfvén waves have almost a frequency-independent response below resonance.

It is noted, however, that in general there may be a mixture of Alfvén waves and other waves, such as acoustic waves, in the plasma.

The plasma may be described as comprising ions and electrons, giving rise to a total neutral charge. Since the ion mass is typically more than 1800 times greater than the electron mass, the electron mass may be neglected. The mass density and the corresponding forcing upon the plasma is therefore determined by the ion mass, $m$. Alfvén waves having a frequency $\omega$ propagate along magnetic field lines $k = (0,0,k)$ in Cartesian coordinates and have circular polarization. The following expression applies for the longitudinal gradient force (in cgs units) governed by Alfvén waves in a fluid:

$$F_z = -\frac{e^2}{4m(\omega^2 - \Omega^2)}\frac{\partial E^2}{\partial z} \ , \qquad (1)$$

where $e$ is the elementary charge and where $\Omega$ is a cyclotron resonance frequency. The spatial gradient of the squared wave electric field $E^2$ in the $z$-direction determines the magnitude of the force. It is noted that the expression (1) has a singularity at $\omega^2 = \Omega^2$. Moreover, the gradient force is attractive for $\omega^2 < \Omega^2$ and repulsive for $\omega^2 > \Omega^2$. Thereby, low-frequency Alfvén waves having $\omega^2 < \Omega^2$ attract particles towards the wave source, while high-frequency Alfvén waves having $\omega^2 > \Omega^2$ repel the particles. Attraction at low frequencies may be conceived as intuitively wrong. However, it clearly applies for a plasma and has also been experimentally and theoretically confirmed for neutral solid-state matter. In addition to having this bipolar directional force shift at wave resonance, the gradient force is independent of the sign of the charge of the particle, due to the factor of $e^2$. This implies that the force for positive ions and electrons is directed in the same direction.

It is noted that neutral matter may be in a fluid state, a gas state, a plasma state, or a solid state. Since neutral matter on an atomic and nuclear level constitute charges, one may therefore consider atomic oscillations (e.g. Brownian motions) and interatomic vibrations as "fundamental frequencies". The electric field term of EM waves should therefore affect an atomic "media" bound by e.g. Van-der-Wahl forces in a similar way as a plasma bound by a strong magnetic field.

For unmagnetized neutrals the analogy implies that wave energy may penetrate, since the gradient force works on atomic protons, electrons and neutrons collectively.

For low-frequency waves such as $\omega^2 << \Omega^2$, the expression in equation (1) simplifies since $\omega$ may be ignored. In this case, the force becomes attractive, regardless of atomic structure or mass.

However, approaching resonance frequency $\omega^2 = \Omega^2$ the gradient force increases non-linearly. Resonance frequencies in plasma physics are related with the intrinsic fluid properties, such as a plasma density, a particle mass, a particle inertia, and the magnetic field.

Under the assumption that the EM waves irradiating the plasma are linearly polarized in many planes, the gradient force exerted on individual particles/atoms of mass $m_a$ by EM waves with a radiation electric field E becomes

$$F_z = -\frac{e^2}{4m_a(\omega^2 - \Omega_a^2)}\frac{\partial E^2}{\partial z} \ . \qquad (2)$$

In particular, this expression may be valid for the first fuel component. The theoretical gradient force versus frequency in expression (2) resembles that of expression (1), except that we have now introduced a resonance frequency $\Omega_a$. The resonance frequency $\Omega_a$ may be a resonance frequency for matter in any aggregate state, i.e. solid, liquid, gas or plasma. The gradient force is again attractive over the entire frequency range below resonance, i.e. for $\omega^2 < (\Omega_a)^2$. Above resonance $\omega^2 > (\Omega_a)^2$, the force is repulsive. At frequencies well below resonance, $\omega^2 << (\Omega_a)^2$, the gradient force is independent of wave frequency and the following expression applies:

$$F_z \approx \frac{e^2}{4m_a \Omega_a{}^2} \frac{\partial E^2}{\partial z} \quad . \qquad (3)$$

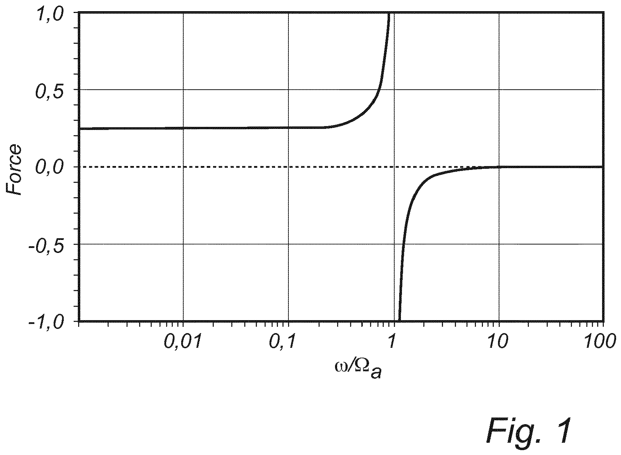

The attractiveness and repulsiveness of the gradient force is illustrated in Fig. 1, illustrating the gradient force as a function of $\omega/\Omega_a$. In Fig. 1 the Alfvén wave Gradient force versus normalized frequency for unit material constant, ($e^2/4m_1$ = 1) and $\frac{\partial E^2}{\partial z} = 0.25$ of expression (2) is illustrated. The left hand curve marks attractive force and the right hand curve marks repulsive force.

If the matter is in a solid aggregate state, the resonance frequency may be written as $\Omega_a$ = c/a, where a is the interatomic distance and c is the local speed of light in the media. In this case we get for $\omega^2 << (\Omega_a)^2$ the approximate expression

$$F_z \approx \frac{a^2 e^2}{4m_a c^2} \frac{\partial E^2}{\partial z} = \xi(a, m_a) \frac{\partial E^2}{\partial z} \quad . \qquad (4)$$

Here, the force depends on a material constant, $\xi(a, m_a)$, and the spatial gradient of the squared wave electric field $E^2$ propagating into the matter. The wave energy may go into heating and/or to kinetic energy and/or to potential energy. Wave attraction is determined by the spatial gradient of $E^2$ which may be written as the quotient $\delta E^2/\delta z$, where $\delta E^2$ is a difference of $E^2$ over a differential interaction length $\delta z$. A material constant $\xi(a, m_a)$, the gradient $\delta E^2/\delta z$ and the transverse wave electric field E, now determines the gradient force exerted on individual atoms in the body. Notice that the interatomic distance a defines the binding force, or tension, in analogy with the magnetic field controlling the plasma motion. The a-factor may be a parameter defining resonance. There may be additional parameters for defining resonance.

More generally, u in the expression $\Omega_a$ = u/a is related with the local speed of EM waves in the media (e.g. acoustic, ion acoustic).

Analytical results derived from expression (4) has been demonstrated to be in good agreement with experimental findings from the Cavendish vacuum experiment.

For the first or the fuel components, the following expression for the gradient force may be obtained from equation (4) above:

$$F_z \approx K(a, m_a) \frac{\partial E^2}{\partial z} \quad . \qquad (5)$$

Here K(a, $m_a$) are characteristic properties of first and/or the second fuel components. The characteristic properties may be a corresponding atomic mass, a number of atoms, and an atomic separation distance, etc.

The gradient force may become stronger when the input power of the input EM radiation becomes stronger. For example, the gradient force in the low-frequency range $\omega^2 << (\Omega_a{}^2)$ is directly proportional to the input power of the input EM radiation.

As noted above, there may also arise Abraham forces in the plasma. The longitudinal Abraham force may in this case be described by $F_z = \pm(\frac{mc^2}{2c_A B^2}) \partial E^2 / \partial t,$ being proportional to the temporal variation of the squared electric field. $c_A$ is the Alfvén velocity and $B$ is the magnetic field. The plus or minus sign corresponds to wave propagation parallel or antiparallel with the direction of the magnetic field $B$, respectively. The Abraham force may be significant for fast changes of E and/or weak magnetic fields. The latter may be associated with low cyclotron resonance frequencies which may give low neutron production rates. The merit of the Abraham force may instead be to promote heating by the fast directional EM field changes.

The fact that EM waves in a plasma may lead to attraction is not obvious. Magnetohydrodynamic waves, MHD waves, are a class of waves in fluids where plasma and magnetic field display a mutual oscillation, the plasma considered "frozen" into the magnetic field. In a spatially unidirectional magnetic field the plasma resonance frequency, rather than the direction of wave propagation (+z-direction), determines the direction of the force. From $\Omega = eB/mc$ we have for low frequency waves, $\omega^2 \ll \Omega^2$ that $F_z \approx \frac{mc^2}{2B^2} \frac{\partial E^2}{\partial z}$. This implies that the force is constant and independent of wave frequency in a homogeneous medium with constant B at low frequencies, the force being proportional to the gradient of the EM-wave intensity. Because the wave intensity is decreasing during interaction (exerting force on matter) the force is directed opposite to the wave propagation direction.

The concept of MHD waves stems from the fluid description of plasmas. MHD waves are governed by the magnetic tension in magnetized plasma. The stronger the magnetic tension, the weaker the wave group velocity and gradient force. In a similar way, MHD waves in solid-state plasma are governed by their dielectric properties and interatomic tension. While the local resonance frequency in gaseous magnetized plasma is determined by the ion gyrofrequency, the local resonance frequency in neutral solids and neutral gases, comprising atoms is less obvious. However, as already noted, the gradient force is charge-neutral, implying that the force on all particles goes in the same direction. Matter is subject to forcing by the local release of wave energy, characterized by a spatial gradient of the wave electric field. To establish transfer of neutrons from the first fuel component to the second fuel component in according to the inventive method, a certain mix of the first fuel component and the second fuel component is required. In the course of this nuclear process, and depending on the environment, other transfer of states, e.g. electron capture, may take place. However, with adequate system design these processes may have minor implications for the output energy budget.

Depending on a fuel temperature and wave resonance, the rate of neutron transfer in the fuel may achieve a state where an output power of the output electromagnetic radiation substantially exceeds an input power of the input electromagnetic radiation.

Besides heating the fuel, excess power from the nucleus mass increasing isotope shift may also enhance the rate of transfer of neutrons from the first fuel component to the second fuel component. The latter may be achieved by enhancing the input power of EM radiation to the fuel.

A further scope of applicability of the present invention will become apparent from the detailed description given below. However, it should be understood that the detailed description and specific examples, while indicating preferred embodiments of the invention, are given by way of illustration only, since various changes and modifications within the scope of the invention will become apparent to those skilled in the art from this detailed description.

Hence, it is to be understood that this invention is not limited to the particular component parts of the device described or steps of the methods described as such device and method may vary. It is also to be understood that the terminology used herein is for purpose of describing particular embodiments only, and is not intended to be limiting. It must be noted that, as used in the specification and the appended claim, the articles "a," "an," "the," and "said" are intended to mean that there are one or more of the elements unless the context clearly dictates otherwise. Thus, for example, reference to "a unit" or "the unit" may include several devices, and the like. Furthermore, the words "comprising", "including", "containing" and similar wordings does not exclude other elements or steps.

Brief Description of the Drawings

The above and other aspects of the present invention will now be described in more detail, with reference to appended drawings showing embodiments of the invention. The figures should not be considered limiting the invention to the specific embodiment; instead they are used for explaining and understanding the invention.

As illustrated in the figures, the sizes of layers and regions are exaggerated for illustrative purposes and, thus, are provided to illustrate the general structures of embodiments of the present invention. Like reference numerals refer to like elements throughout.

Fig. 1 illustrates a gradient force as a function of $\omega/\Omega_a$.
Fig. 2 schematically illustrates an electricity generator.
Fig. 3 is block scheme of a method for generating electricity.
Fig. 4 schematically illustrates an alternative electricity generator.
Fig. 5 schematically illustrates yet an alternative electricity generator.

Detailed description

The present invention will now be described more fully hereinafter with reference to the accompanying drawings, in which currently preferred embodiments of the invention are shown. This invention may, however, be embodied in many different forms and should not be construed as limited to the embodiments set forth herein; rather, these embodiments are provided for thoroughness and completeness, and to fully convey the scope of the invention to the skilled person.

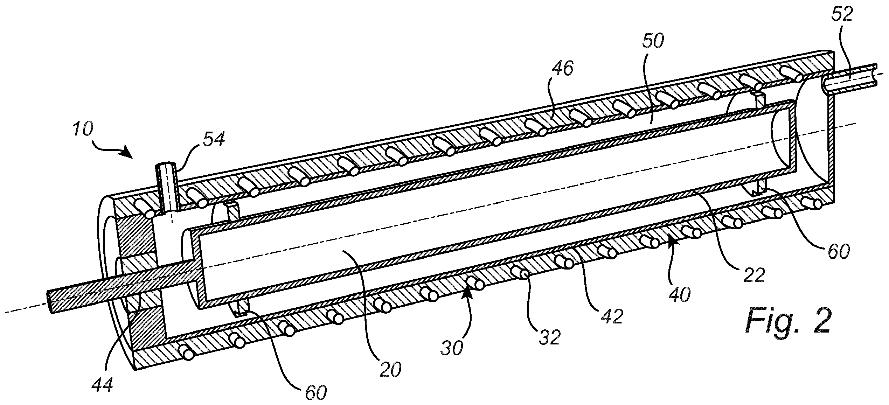

Figure 2 schematically illustrates an electricity generator 10. The electricity generator 10 comprises a fuel container 20, a source unit 30 for input electromagnetic radiation, a first electrode 42 and a second electrode 22. The electricity generator 10 may have a cylindrical shape with an annular cross section. It is however, realized that other shapes may also be used.

The fuel container 20 may have a cylindrical shape with an annular cross section. It is however, realized that other shapes may also be used. The fuel container 20 comprises a fuel. The fuel comprises a first and a second fuel component. The first and a second fuel component are preferably mixed. The fuel may be a solid before it is subjected to input electromagnetic radiation. Hence, initially before being subjected to input electromagnetic radiation, the fuel is preferably a solid. The fuel may be $TiD_x$, wherein deuterium, D, is the first fuel component and titanium, Ti, is the second fuel component. $TiD_x$ is a good candidate for the fuel since deuterium has low release energy for neutrons, the end products after the isotope shifts are stable and the resonance frequency is in a range giving an output voltage being practical for many applications. However, it is realized that other fuel mixtures may be used. For example, other metal hydrides wherein H has been exchanged for D.

Common for the first fuel component is that it may undergo a nucleus mass reducing isotope shift upon being subjected for input electromagnetic radiation. By subjecting the first fuel component for input electromagnetic radiation, energy transfer may be provided by means of the wave-particle acceleration process as was more extensively discussed above in the summary of the invention section. Upon transferring energy to the first fuel component it may assume a high-energy state wherein neutrons of the first fuel component will be affected and a nucleus mass reducing isotope shift may occur.

Common for the second fuel component is that it shall be chosen such that it may undergo a nucleus mass increasing isotope shift upon absorbing a neutron from the first fuel component upon the first fuel component undergoing the nucleus mass reducing isotope shift. Further, the second fuel component shall be chosen such that the available energy gained by the nucleus mass increasing isotope shift is greater than, the threshold energy for inducing the mass reducing isotope shift in the first fuel component. Moreover, the resulting isotope of the nucleus mass increasing isotope shift in the second fuel component is preferably a stable isotope.

Hence, the first fuel component may be deuterium. Deuterium is chosen since it may undergo a nucleus mass reducing isotope shift upon being subjected for input electromagnetic radiation. By subjecting deuterium for input electromagnetic radiation, energy transfer may be provided by means of the wave-particle acceleration process as was more extensively discussed above in the summary of the invention section. Upon transferring energy to the deuterium it may assume a high-energy state wherein neutrons of the deuterium will be affected and a nucleus mass reducing isotope shift may occur. The mass reducing isotope shift in deuterium originate from the reaction channel $D + W_s \rightarrow n + 1\,H$, where D is deuterium, 2H, and where 1 H is protium, i.e. hydrogen with no neutron in the nucleus. Further, $W_s$ is the threshold energy for the mass reducing isotope shift to occur. The threshold energy for inducing a mass reducing isotope shift in D is 2.25 MeV. It is noted that 1 H as well as 2H, i.e. D, are stable isotopes per se. It is moreover noted that the reaction above may be induced by irradiation above the threshold energy.

In order to induce the mass reducing isotope shift in deuterium the fuel container 20 is configured to be subjected to input electromagnetic radiation. Further, by subjecting the fuel to input electromagnetic radiation a plasma of the fuel may be formed. The input electromagnetic radiation is advantageously chosen such that it is below the plasma resonance frequency of the first fuel component. For example, in the example with $TiD_x$ the plasma resonance frequency of deuterium in the lattice structure of $TiD_x$. The plasma resonance frequency of deuterium in the lattice structure of $TiD_x$ may be expressed as:

$$\omega_{ion} = 2\pi f_{ion} = \sqrt{\frac{n_0 e^2}{m_i \varepsilon_0}} \qquad (6)$$

wherein c is the speed of light and a is the interatomic distance in the lattice. With an interatomic distance in the lattice of 45 nm, the plasma resonance frequency of deuterium in the lattice structure of $TiD_x$ is $6.7 \cdot 10^{17}$ rad/s, hence $1.1.10^{17}$ Hz. This gives a wavelength of 2.8 nm, which is within the soft X-ray spectrum. By altering the lattice structure of the fuel the plasma resonance frequency of the first fuel component may be altered. Thus, the input electromagnetic radiation may be chosen in the thermal range, 430 THz - 300 GHz. By using a sufficient effect of input electromagnetic radiation the fuel may be transformed into a plasma. Further, the sufficient effect of input electromagnetic radiation may induce the wave-particle acceleration process discussed above in the summary of the invention section such that the mass reducing isotope shift in the first fuel component may occur.

The source unit 30 is configured to expose the fuel for input electromagnetic radiation. The source unit 30 may comprise an induction coil arrangement 32 and an electrical power source (not shown) for powering the induction coil arrangement 32. The induction coil arrangement 32 may be symmetrically arranged, e.g. in a twisted configuration, around the fuel container 20. Thereby, a geometric focusing onto a centre of the electricity generator 10 is provided. The induction coil arrangement 32 comprises at least one induction coil. In operation of the electricity generator 10, the induction coil arrangement 32 is connected to an electrical power source (not shown) which powers the induction coil arrangement 32. The electrical power source may be arranged to pass an alternating current through the induction coil arrangement 32. The induction coil arrangement 32 may e.g. be a heat wire covered with a ceramic. By powering the induction coil arrangement 32 it act as a generator of electromagnetic radiation in the thermal range of the electromagnetic spectrum.

As mentioned above the second fuel component may be Ti. Ti comprises a plurality of stable isotopes, namely $^{46}$Ti, $^{47}$Ti, $^{48}$Ti, $^{49}$Ti and $^{50}$Ti. Among those $^{48}$Ti is the most common one. Ti is a good candidate for the second fuel component since the mass increasing isotope shift will make available the following energies:

$^{46}$Ti to $^{47}$Ti = 8.87MeV;
$^{47}$Ti to $^{48}$Ti = 11.6MeV;
$^{48}$Ti to $^{49}$Ti = 8.13MeV;
$^{49}$Ti to $^{50}$Ti = 10.9MeV.

Hence, depending on the isotope of titanium, the titanium may undergo different amount of mass increasing isotope shift.

The output electromagnetic radiation will be radiated as a pulse of electromagnetic radiation. The pulse having a total energy of the energy of the mass increasing isotope shift energy. The pulse comprising a plurality of photons. Each photon of the pulse of output electromagnetic radiation having a frequency above and close to the plasma resonance frequency of the second fuel component. The first and second plasma resonance frequencies are approximately the same in a solid. Hence, for example, approximately 10 MeV of energy will be released at each mass increasing isotope shift from Ti. The energy will be released as a pulse of electromagnetic radiation comprising a number of photons instead of a single photon having approximately 10 MeV.

The output electromagnetic radiation may be in the ultra violet spectral range and/or in the soft X-ray spectral range.

As mentioned above, the fuel in the fuel container 20 may be a solid mix of materials. In case the fuel is a solid the first fuel component may be affected by thermal radiation of the same or different frequencies. The thermal radiation act as wave train pulses with virtual wavelength and energy enough to support the nucleus mass reducing isotope shift in the first fuel component. Hence, due to the exposure of the fuel for input electromagnetic radiation the nucleus mass reducing isotope shift in the first fuel component will occur. As a result, neutrons will be available for the nucleus mass increasing isotope shift in the second fuel component. The neutrons may not escape from the solid. However, the neutron may be captured by the solid itself. This in order to not violate the photoelectric effect. Hence, neutrons made available by the mass reducing isotope shift will remain within the fuel. The neutron will hence be available for the nucleus mass increasing isotope shift in the second fuel component. As a result of the nucleus mass increasing isotope shift in the second fuel component, output electromagnetic radiation will be released. The energy of the output electromagnetic radiation will be released as output wave train pulses. The individual photons of an output wave train pulse may be in Ultra Violet, UV, range and/or the soft X-ray range of the electromagnetic spectrum. The photons of the output wave train pulses are then collected at the first electrode 42 for photoelectric transformation of the photons into electrons.

The fuel container 20 may be closed compartment comprising the fuel. The fuel container 20 may comprise a fuel container housing. The fuel container housing may be sealed under low pressure. This in order to reduce presence of oxygen. The fuel container housing may be made of a metal. The metal may e.g. be tungsten, W, or titanium, Ti. Alternatively, the fuel container housing may be made of glass. Yet alternatively, the fuel container housing may be made of ceramic. The fuel container housing may have an annular cross-section. The fuel container housing contains the fuel. In the example of the fuel being TiD$_x$ the fuel may be in powder form with low porosity. Hence, the fuel may be a solid mix. The powder may be compressed.

The first electrode 42 is arranged such that the output electromagnetic radiation may interact with it in order to induce photoelectrical transformation of the output electromagnetic radiation into electrons. Hence, electrons may be ejected from the first electrode 42 due to the photoelectric effect. Preferably the first electrode 42 is surrounding the fuel container 20. The first electrode 42 may be arranged as a layer of an electricity generator housing 40. The electricity generator housing 40 may surround the fuel container 20. The layer constituting the first electrode 42 may be the innermost layer of the electricity generator housing 40. The first electrode 42 is preferably made of metal.

The second electrode 22 is preferably located at a distance from the first electrode 42. The second electrode 22 is configured to collect the electrons ejected from the first electrode 42. Preferably, a space between the first and second electrodes is evacuated. The second electrode 22 may be supported by the fuel container 20, preferably the fuel container housing. The second electrode 22 may be an outermost layer of the fuel container housing. Alternatively, the second electrode 22 may be an electrode being wrapped around the fuel container housing.

By applying a potential difference between the first and second electrodes an electrical current may be achieved. The electrical current may be used for loading a battery (not shown) or powering an electrical device (not shown). For example, the electricity generator 10 may be used for powering an electric car.

A space delimited by the electricity generator housing 40 and the fuel container 20 may be considered as a compartment 50. The compartment 50 is preferably evacuated. Since, the compartment may be delimited by the first electrode 42 and the second electrode22, the compartment 50 may act as a photoelectric cell. Hence, in some embodiments the electricity generator housing 40 and the fuel container 20 is delimiting the compartment 50. The compartment 50 may also be considered as acting as a thermos insulator for the electricity generator.

The compartment 50 may comprise and inlet 52 and an outlet 54. The compartment 50 may be evacuated via the inlet 52 and/or the outlet 54. Further, the electricity generator 10 may be cooled by letting fluid flow through the compartment 50. An example of fluid to be used is an inert gas, for example neon. Hence, the inlet 52 and the outlet 54 together with a source (not shown) of fluid may be part of a primary cooling unit for the electricity generator 10. Letting fluid flow through the compartment 50 may also clean out hydrogen or deuterium leaking from the fuel container 20. If so the inlet 52 and the outlet 54 may be connected to a hydrogen cell (not shown) in order to neutralize the hydrogen and/or deuterium into water. Further, the effect of the electricity generator 10 may be controlled by letting fluid flow through the compartment 50. Moreover, the electricity generator 10 may be stopped by letting fluid flow through the compartment 50. Accordingly, the inlet 52 and the outlet 54 may be part of a control system for the electricity generator 10.

The electricity generator housing 40 may be configured to support the induction coil arrangement 32. For example, the induction coil arrangement 32 may be wounded around the electricity generator housing 40. The induction coil arrangement 32 may alternatively form part of the electricity generator housing 40.

The electricity generator housing 40 may further support the fuel container 20. For example, the fuel container 20 may be supported at a seal 44. The seal 44 may electrically isolate the fuel container 20 from the electricity generator housing 40. The seal 44 may e.g. be a ceramic seal. The seal may be used to releasably attach the fuel container 20 to the electricity generator housing 40. Hence, the fuel container 20 may be releasably attachable to the electricity generator 10. Hence, upon the fuel of the fuel container 20 is consumed the fuel container 20 may be exchanged for a new one with fresh fuel.

The electricity generator 10 may further comprise one or more support members 60. The one or more support members 60 is configured to act as support between the electricity generator housing 40 and the fuel container 20. Hence, the one or more support members 60 may be configured to be inside the compartment 50. The one or more support members 60 may be made of ceramic material.

The electricity generator housing 40 may further comprise a secondary cooling unit 46. The secondary cooling unit 46 is configured to regulate the temperature of the electricity generator 10. The secondary cooling unit 46 may be a liquid cooling unit configured to let a flow of liquid through one or more cavities of the electricity generator housing 40. The liquid may be water. The secondary cooling unit 46 may be a gas cooling unit configured to let a flow of gas through one or more cavities of the electricity generator housing 40. The gas may e.g. be air. By regulating the temperature of the electricity generator 10 the electricity generating process may be regulated.

Heat generated in the electricity generator 10 is for the use of supporting electricity production of the electricity generator 10. Upon the electricity generator 10 being in balance, hence, when the outgoing electrical power from the electricity generator 10 is reached, the cooling unit 46 may be used for removing excess heat, just like in a combustion engine. The secondary cooling unit 46 and/or the primary cooling unit may be used to control the electricity generator 10. For example, the secondary cooling unit 46 and/or the primary cooling unit may be used to close down the electricity generator 10.

Controlling of the source unit 30 may also be used to control the electricity generator 10.

Depending on an equilibrium temperature for the electricity generator 10 the electricity power output will vary. The process of interaction between the first fuel component and the input electromagnetic radiation and the process of producing output electromagnetic radiation is not governed by plasma resonance in the solid fuel but instead by wave train pulses capacity to contribute to nucleus mass reducing isotope shift in the first fuel component and hence producing slow neutrons from the fuel. This is an effect of the uncertainty principle and acts only within very short distances, approximately the interatomic distance of the atoms of the fuel. This is the reason why the neutrons remain inside the fuel. The source unit 30 may only be used to start-up the electricity generator 10 and for small adjustments of the electricity generator 10.

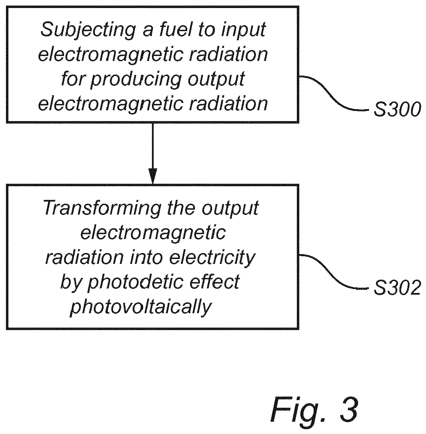

With reference to Fig. 3 a method for generating electricity will now be discussed. The method comprises the following acts. It is realized that the acts do not necessarily need to be performed in the order listed below. Subjecting S300 a fuel, comprising a first and a second fuel component, to input electromagnetic radiation such that a nucleus mass reducing isotope shift occur in the first fuel component, a nucleus mass increasing isotope shift occur in the second fuel component, and output electromagnetic radiation resulting from the nucleus mass increasing isotope shift is outputted. Preferably, the nucleus mass reducing isotope shift is less energy requiring than the nucleus mass increasing isotope shift. Transforming S302 the output electromagnetic radiation into electricity. The output electromagnetic radiation may be transformed into electricity by photoelectrically transforming the output electromagnetic radiation into electrons at a first electrode and collecting the electrons at a second electrode. Alternatively, or in combination, the output electromagnetic radiation may be transformed into electricity by photovoltaically transforming the output electromagnetic radiation into electricity at a photovoltaic cell. As a result, electricity may be generated. The method may further comprise, applying a potential difference between the first and second electrodes or applying a potential difference over the photovoltaic cell.

The first fuel component may be deuterium. The second fuel component may be titanium. The fuel may be a solid, preferably TiD$_x$. The input electromagnetic radiation may be in the thermal spectral range. The output electromagnetic radiation may be in the ultra violet spectral range or in the soft X-ray range.

The person skilled in the art realizes that the present invention by no means is limited to the preferred embodiments described above. On the contrary, many modifications and variations are possible within the scope of the appended claims.

For example, the first component may be one or more from the following list of candidates for the first fuel component deuterium or lithium.

Further, the electricity generator may be physically designed in many different ways. In Fig. 2 one example of a physical design is schematically illustrated. However, the person skilled in the art realizes that the design of the electricity generator may be varied due to many different reasons, such as where it shall be installed for operation.

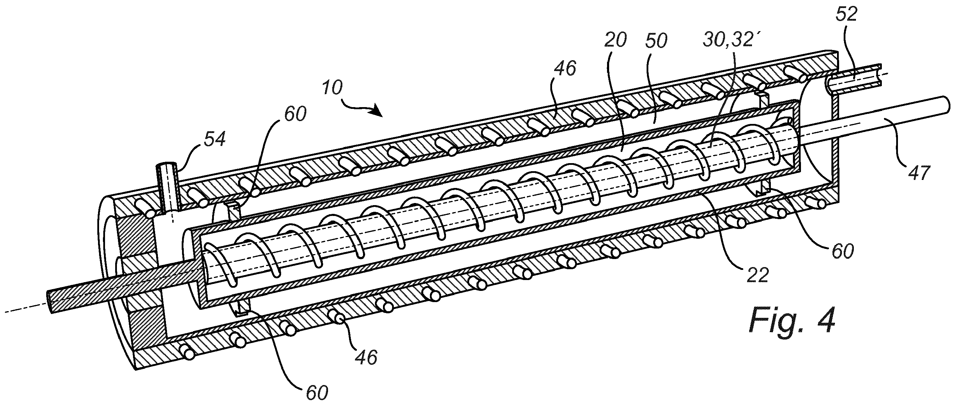

In Fig. 4, another example of a physical design is shown. The general design is in many aspects similar to the design in Fig. 2 and reference is made to detailed description related to Fig. 2. However, one difference is that in the design in Fig. 4, the source unit 30 is arranged inside the fuel compartment 20. Thereby, the generator 10 as a whole will act as a heat insulator preventing excessive heat to dissipate into the surroundings. The source unit 30 may e.g. be an induction coil unit 32'. The electricity generator 10 is in the design in Fig. 4 also provided with a cooling unit 47 extending along the source unit 30 inside the fuel compartment 20. Thereby it is possible to quickly regulate the temperature of the source unit 30. The cooling unit 47 may e.g. be a tubing for a cooling medium, such as a gas or liquid.

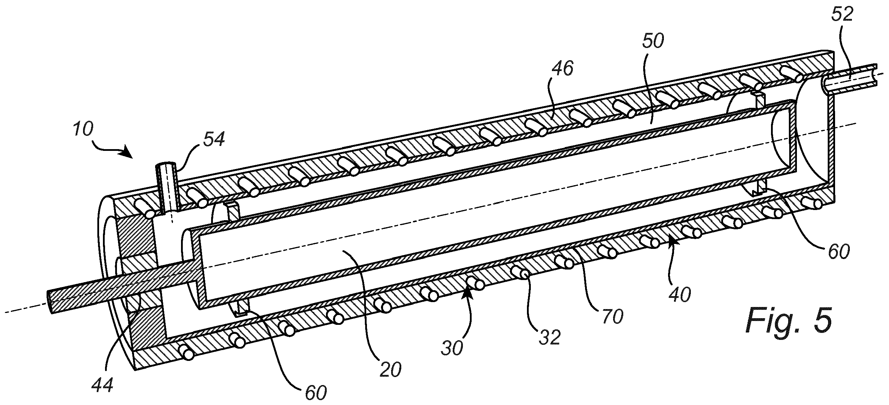

In Fig. 5, yet another example of a physical design is shown. The general design is in many aspects similar to the design in Figs. 2 and 4 and reference is made to detailed description related to Figs. 2 and 4. However, one difference is that in the design in Fig. 5, electricity is not generated by photoelectrical effect at a first electrode and collecting the electrons at a second electrode, instead a photovoltaic cell 70 is used for transforming the output electromagnetic radiation into electricity. The photovoltaic cell 70 is arranged such that the output electromagnetic radiation may interact with it in order to induce photovoltaic transformation of the output electromagnetic radiation into electron-hole pairs. Preferably the photovoltaic cell 70 is surrounding the fuel container 20. The photovoltaic cell 70 may be arranged as a layer of the electricity generator housing 40. The electricity generator housing 40 may surround the fuel container 20. The layer constituting the photovoltaic cell 70 may be the innermost layer of the electricity generator housing 40. By applying a potential difference over two electrodes of the photovoltaic cell 70 an electric current may be induced. The electrical current may be used for loading a battery (not shown) or powering an electrical device (not shown). For example, the electricity generator may be used for powering an electric car. In Fig. 5 the electricity generator 10 has been illustrated as having the source unit 30 arranged as a part of the electricity generator housing 40. It is however understood that the source unit 30 may be arranged inside the fuel compartment 20 just as in the embodiment disclosed in connection with Fig. 4.

Additionally, variations to the disclosed embodiments can be understood and effected by the skilled person in practicing the claimed invention, from a study of the drawings, the disclosure, and the appended claims.

**Claims**

1. A method for generating electricity, the method comprising:

    subjecting a fuel, comprising a first and a second fuel component, to input electromagnetic radiation for producing:

        a nucleus mass reducing isotope shift in the first fuel component,
        a nucleus mass increasing isotope shift in the second fuel component, and
        output electromagnetic radiation resulting from the nucleus mass increasing isotope shift; and

    generating electricity from the output electromagnetic radiation by transforming the output electromagnetic radiation into electricity by photoelectrically transforming the output electromagnetic radiation into electrons at a first electrode (52), and collecting the electrons at a second electrode (22) or by photovoltaically transforming the output electromagnetic radiation into electricity at a photovoltaic cell (70).

2. The method according to claim 1, wherein the first fuel component is deuterium.

3. The method according to claim 1 or 2, wherein the second fuel component is titanium.

4. The method according to any one of claims 1-3, wherein the fuel is a solid, preferably $TiD_x$.

5. The method according to any one of claims 1-4, wherein the input electromagnetic radiation is in the thermal spectral range.

6. The method according to any one of claims 1-5, wherein the output electromagnetic radiation is in the ultra violet spectral range or in the soft X-ray range.

7. An electricity generator comprising:

   a fuel container (20) for containing a fuel comprising a first and a second fuel component;
   a source unit (30) configured to expose the fuel for input electromagnetic radiation for producing:

   a nucleus mass reducing isotope shift in the first fuel component,
   a nucleus mass increasing isotope shift in the second fuel component, and

   output electromagnetic radiation resulting from the nucleus mass increasing isotope shift;
   a first electrode (42) configured to photoelectrically transform the output electromagnetic radiation into electrons; and
   a second electrode (22) configured to collect the electrons, thereby provide generation of electricity.

8. The electricity generator according to claim 7, further comprising an electricity generator housing (40) surrounding the fuel container (20), wherein the fuel container (20) comprises a fuel container housing supporting the second electrode (22), and wherein an inner layer of the electricity generator housing (40) constitutes the first electrode (42).

9. An electricity generator comprising:

   a fuel container (20) for containing a fuel comprising a first and a second fuel component;
   a source unit (30) configured to expose the fuel for input electromagnetic radiation for producing:

   a nucleus mass reducing isotope shift in the first fuel component,
   a nucleus mass increasing isotope shift in the second fuel component, and

   output electromagnetic radiation resulting from the nucleus mass increasing isotope shift; and
   a photovoltaic cell (70) configured to transform the output electromagnetic radiation into electricity.

10. The electricity generator according to claim 7 or 9, wherein the fuel is a solid, preferably $TiD_x$.

11. The electricity generator according to claim 7 or 9, wherein the source unit (20) is configured to expose the fuel for electromagnetic radiation input energy in the infrared spectral range.

12. The electricity generator according to claim 7 or 9, wherein the source unit (30) comprises an induction coil arrangement (32).

13. The electricity generator according to claim 7 or 9, further comprising an electricity generator housing (40) surrounding the fuel container (20), wherein the fuel container (20) comprises a fuel container housing (24), wherein the electricity generator housing (40) and the fuel container housing is delimiting a compartment (50).

14. The electricity generator according to claim 13, wherein the compartment comprises an inlet for an incoming flow of a fluid and an outlet for an outgoing flow of the fluid, wherein the fluid preferably is an inert gas, preferably neon.

15. The electricity generator according to claim 7 or 9, further comprising an electricity generator housing (40) surrounding the fuel container (20), wherein the electricity generator housing (40) comprises a secondary cooling unit configured to regulate the temperature of the electricity generator.

Fig. 1

Fig. 2

Subjecting a fuel to input
electromagnetic radiation
for producing output
electromagnetic radiation — S300

Transforming the output
electromagnetic
radiation into electricity
by photodetic effect — S302
photovoltaically

Fig. 3

Fig. 4

Fig. 5

Europäisches
Patentamt

European
Patent Office

Office européen
des brevets

# EUROPEAN SEARCH REPORT

Application Number

EP 17 17 0748

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y,D | EP 3 086 323 A1 (LIDGREN HANS [MC]; LUNDIN RICKARD [SE]) 26 October 2016 (2016-10-26)<br>* paragraph [0007] *<br>* paragraph [0016] - paragraph [0019] *<br>* paragraph [0029] *<br>* paragraph [0034] *<br>* paragraph [0109] - paragraph [0113] *<br>* paragraph [0120] *<br>* figure 2 * | 1-15 | INV.<br>G21B3/00<br>G21D7/04 |
| Y | WO 99/54884 A1 (CNAM CONSERVATOIRE NATIONAL DE [FR]; DUFOUR JACQUES JULIEN JEAN [FR];) 28 October 1999 (1999-10-28)<br>* page 5, line 34 - page 6, line 4 * | 9 | |
| Y | US 2004/247522 A1 (MILLS RANDELL L [US]) 9 December 2004 (2004-12-09)<br>* paragraph [0132] *<br>* paragraph [0456] - paragraph [0458] * | 1-8, 10-15 | |
| Y | US 2014/140461 A1 (LITTLE REGINALD B [US]) 22 May 2014 (2014-05-22)<br>* paragraph [0114] * | 5,11 | TECHNICAL FIELDS SEARCHED (IPC) |
| Y | WO 2010/058288 A1 (PIANTELLI SILVIA; BERGOMI LUIGI [IT]; GHIDINI TIZIANO [IT]) 27 May 2010 (2010-05-27)<br>* page 24, line 11 - line 18 *<br>* figure 16 * | 14 | G21B<br>G21D |

The present search report has been drawn up for all claims

| Place of search | Date of completion of the search | Examiner |
|---|---|---|
| The Hague | 26 September 2017 | Capostagno, Eros |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

.......................................................................................................
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 17 17 0748

This annex lists the patent family members relating to the patent documents cited in the above-mentioned European search report.
The members are as contained in the European Patent Office EDP file on
The European Patent Office is in no way liable for these particulars which are merely given for the purpose of information.

26-09-2017

| Patent document cited in search report | | Publication date | Patent family member(s) | | Publication date |
|---|---|---|---|---|---|
| EP 3086323 | A1 | 26-10-2016 | EP 3086323 A1 | | 26-10-2016 |
| | | | WO 2016169741 A1 | | 27-10-2016 |
| WO 9954884 | A1 | 28-10-1999 | AT 235095 T | | 15-04-2003 |
| | | | AU 3154699 A | | 08-11-1999 |
| | | | CA 2328889 A1 | | 28-10-1999 |
| | | | DE 69906045 D1 | | 24-04-2003 |
| | | | DE 69906045 T2 | | 29-01-2004 |
| | | | EP 1072041 A1 | | 31-01-2001 |
| | | | ES 2190202 T3 | | 16-07-2003 |
| | | | FR 2777687 A1 | | 22-10-1999 |
| | | | JP 2002512377 A | | 23-04-2002 |
| | | | WO 9954884 A1 | | 28-10-1999 |
| US 2004247522 | A1 | 09-12-2004 | AU 2002365227 A1 | | 02-09-2003 |
| | | | CA 2466953 A1 | | 14-08-2003 |
| | | | US 2004247522 A1 | | 09-12-2004 |
| | | | US 2009196801 A1 | | 06-08-2009 |
| | | | WO 03066516 A2 | | 14-08-2003 |
| US 2014140461 | A1 | 22-05-2014 | NONE | | |
| WO 2010058288 | A1 | 27-05-2010 | AU 2009318893 A1 | | 21-07-2011 |
| | | | AU 2015221519 A1 | | 15-10-2015 |
| | | | BR PI0922491 A2 | | 15-12-2015 |
| | | | CA 2744430 A1 | | 27-05-2010 |
| | | | CN 102217001 A | | 12-10-2011 |
| | | | DK 2368252 T3 | | 15-04-2013 |
| | | | EP 2368252 A1 | | 28-09-2011 |
| | | | ES 2403118 T3 | | 14-05-2013 |
| | | | HK 1163336 A1 | | 26-02-2016 |
| | | | HR P20130334 T1 | | 31-05-2013 |
| | | | IT 1392217 B1 | | 22-02-2012 |
| | | | JP 2012510050 A | | 26-04-2012 |
| | | | KR 20110103396 A | | 20-09-2011 |
| | | | PT 2368252 E | | 23-04-2013 |
| | | | RU 2011116098 A | | 27-12-2012 |
| | | | SI 2368252 T1 | | 31-05-2013 |
| | | | US 2011249783 A1 | | 13-10-2011 |
| | | | WO 2010058288 A1 | | 27-05-2010 |

EPO FORM P0459

For more details about this annex : see Official Journal of the European Patent Office, No. 12/82

**REFERENCES CITED IN THE DESCRIPTION**

**Patent documents cited in the description**

• EP 3086323 A1